# EUROPEAN PATENT APPLICATION

(11) **EP 2 693 316 A1**
(43) Date of publication of application: **05.02.2014**
(21) Application number: 12178760.0
(22) Date of filing: 31.07.2012
(51) Int. Cl.: G06F 3/044, G06F 3/041

(54) **Electronic device and method of detecting touches on a touch-sensitive display**

(71) Applicant: BlackBerry Limited, Waterloo, ON N2K 0A7 (CA)
(72) Inventor: Poulsen, Jens Kristian, Waterloo, Ontario N2L 3W8 (CA)
(74) Representative: Fennell, Gareth Charles

(57) **Abstract**

A method includes driving a first set of electrodes while sensing utilizing a second set of electrodes yielding first sense values, driving the second set of electrodes while sensing utilizing the first set of electrodes yielding second sense values, determining combined values based on the first sense values and the second sense values and identifying a touch location based on the combined values.

## Description

### Field of Technology

The present disclosure relates to electronic devices, including but not limited to, portable electronic devices having touch-sensitive displays and their control.

### Background

Electronic devices, including portable electronic devices, have gained widespread use and may provide a variety of functions including, for example, telephonic, electronic messaging and other personal information manager (PIM) application functions. Portable electronic devices include, for example, several types of mobile stations such as simple cellular telephones, smart phones, wireless personal digital assistants (PDAs), and laptop computers with wireless 802.11 or Bluetooth capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified depending on the functions and operations being performed. With continued demand for decreased size of portable electronic devices, touch-sensitive displays continue to decrease in size. Improvements in devices with touch-sensitive displays are desirable.

### Background

A method includes exciting a first gate line of a touch-sensitive display to control display of information, driving a first scanning electrode of the touch-sensitive display while exciting the gate line, wherein the first gate line is associated with a first area of the display and the first scanning electrode is associated with a second area of the display, which second area is spaced from the first area. An electronic device includes a touch-sensitive display comprising touch sensors, and a processor coupled to the touch-sensitive display and configured to drive a first set of electrodes while sensing with a second set of electrodes yielding first sense values, drive the second set of electrodes while sensing with the first set of electrodes yielding second sense values, determine combined values based on the first sense values and the second sense values, and identify a touch location based on the combined values.

### Brief Description of the Drawings

FIG. 1 is a block diagram of a portable electronic device in accordance with the disclosure.

FIG. 2 is a front view of a portable electronic device in accordance with the disclosure.

FIG. 3 is a flowchart illustrating a method of detecting touches in accordance with the disclosure.

### Detailed Description

The following describes an electronic device and a method of detecting touches on a touch-sensitive display of the electronic device. The method includes driving a first set of electrodes while sensing utilizing a second set of electrodes yielding first sense values, driving the second set of electrodes while sensing utilizing the first set of electrodes yielding second sense values, determining combined values based on the first sense values and the second sense values, and identifying a touch location based on the combined values.

For simplicity and clarity of illustration, reference numerals may be repeated among the figures to indicate corresponding or analogous elements. Numerous details are set forth to provide an understanding of the examples described herein. The examples may be practiced without these details. In other instances, well-known methods, procedures, and components are not described in detail to avoid obscuring the examples described. The description is not to be considered as limited to the scope of the examples described herein.

The disclosure generally relates to an electronic device, such as a portable electronic device as described herein. Examples of electronic devices include mobile, or handheld, wireless communication devices such as pagers, cellular phones, cellular smart-phones, wireless organizers, personal digital assistants, wirelessly enabled notebook computers, tablet computers, mobile internet devices, electronic navigation devices, and so forth. The electronic device may be a portable electronic device without wireless communication capabilities, such as a handheld electronic game, digital photograph album, digital camera, media player, e-book reader, and so forth.

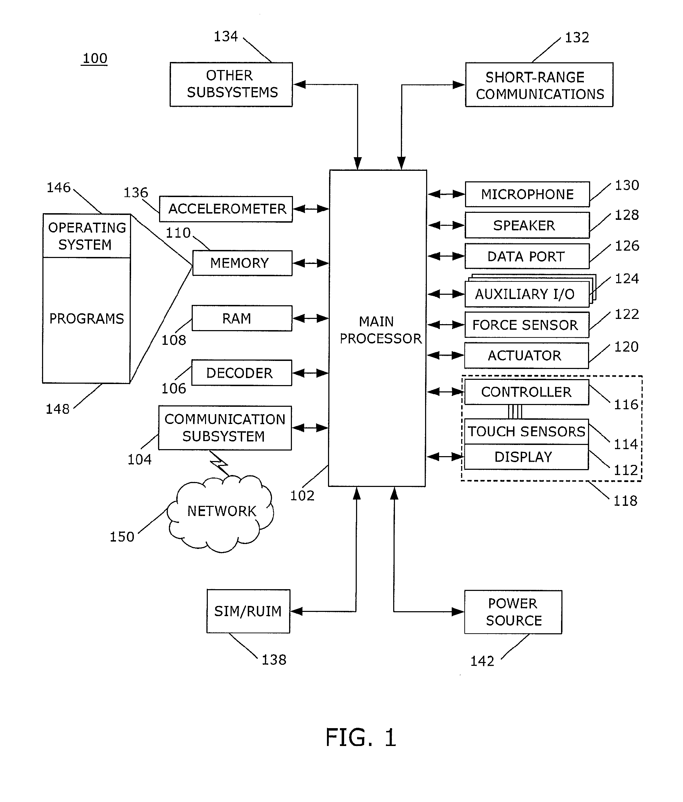

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as a Random Access Memory (RAM) 108, memory 110, a touch-sensitive display 118, one or more actuators 120, one or more force sensors 122, an auxiliary input/output (I/O) subsystem 124, a data port 126, a speaker 128, a microphone 130, short-range communications 132, and other device subsystems 134. The touch-sensitive display 118 includes a display 112 and touch sensors 114 that are coupled to at least one controller 116 that is utilized to interact with the processor 102. Input via a graphical user interface is provided via the touch-sensitive display 118. Information, such as text, characters, symbols, images, icons, and other items that may be displayed or rendered on a portable electronic device, is displayed on the touch-sensitive display 118 via the processor 102. The processor 102 may also interact with an accelerometer 136 that may be utilized to detect direction of gravitational forces or gravity-induced reaction forces.

To identify a subscriber for network access, the portable electronic device 100 may utilize a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs, applications, or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth. A capacitive touch-sensitive display includes one or more capacitive touch sensors 114. The capacitive touch sensors may comprise any suitable material, such as indium tin oxide (ITO).

One or more touches, also known as touch contacts or touch events, may be detected by the touch-sensitive display 118. The processor 102 may determine attributes of the touch, including a location of the touch. Touch location data may include data for an area of contact or data for a single point of contact, such as a point at or near a center of the area of contact. The location of a detected touch may include x and y components, e.g., horizontal and vertical components, respectively, with respect to one's view of the touch-sensitive display 118. A touch may be detected from any suitable input member, such as a finger, thumb, appendage, or other objects, for example, a stylus (active or passive), pen, or other pointer, depending on the nature of the touch-sensitive display 118. Multiple simultaneous touches may be detected.

One or more gestures may also be detected by the touch-sensitive display 118. A gesture, such as a swipe, also known as a flick, is a particular type of touch on a touch-sensitive display 118 and may begin at an origin point and continue to an end point, for example, a concluding end of the gesture. A gesture may be identified by attributes of the gesture, including the origin point, the end point, the distance travelled, the duration, the velocity, and the direction, for example. A gesture may be long or short in distance and/or duration. Two points of the gesture may be utilized to determine a direction of the gesture. A gesture may also include a hover. A hover may be a touch at a location that is generally unchanged over a period of time or is associated with the same selection item for a period of time.

The optional actuator(s) 120 may be depressed or activated by applying sufficient force to the touch-sensitive display 118 to overcome the actuation force of the actuator 120. The actuator(s) 120 may be actuated by pressing anywhere on the touch-sensitive display 118. The actuator(s) 120 may provide input to the processor 102 when actuated. Actuation of the actuator(s) 120 may result in provision of tactile feedback. When force is applied, the touch-sensitive display 118 is depressible, pivotable, and/or movable. Such a force may actuate the actuator(s) 120. The touch-sensitive display 118 may, for example, float with respect to the housing of the portable electronic device, i.e., the touch-sensitive display 118 may not be fastened to the housing. A mechanical dome switch actuator may be utilized. In this example, tactile feedback is provided when the dome collapses due to imparted force and when the dome returns to the rest position after release of the switch. Alternatively, the actuator 120 may comprise one or more piezoelectric (piezo) devices that provide tactile feedback for the touch-sensitive display 118.

Optional force sensors 122 may be disposed in conjunction with the touch-sensitive display 118 to determine or react to forces applied to the touch-sensitive display 118. The force sensor 122 may be disposed in line with a piezo actuator 120. The force sensors 122 may be force-sensitive resistors, strain gauges, piezoelectric or piezoresistive devices, pressure sensors, quantum tunneling composites, force-sensitive switches, or other suitable devices. Force as utilized throughout the specification, including the claims, refers to force measurements, estimates, and/or calculations, such as pressure, deformation, stress, strain, force density, force-area relationships, thrust, torque, and other effects that include force or related quantities. Optionally, force information related to a detected touch may be utilized to select information, such as information associated with a location of a touch. For example, a touch that does not meet a force threshold may highlight a selection option, whereas a touch that meets a force threshold may select or input that selection option. Selection options include, for example, displayed or virtual keys of a keyboard; selection boxes or windows, e.g., "cancel," "delete," or "unlock"; function buttons, such as play or stop on a music player; and so forth. Different magnitudes of force may be associated with different functions or input. For example, a lesser force may result in panning, and a higher force may result in zooming.

The touch-sensitive display 118 includes a display area in which information may be displayed, and a non-display area extending around the periphery of the display area. The display area generally corresponds to the area of the display 112. Information is not displayed in the non-display area by the display, which non-display area is utilized to accommodate, for example, electronic traces or electrical connections, adhesives or other sealants, and/or protective coatings around the edges of the display area. The non-display area may be referred to as an inactive area and is not part of the physical housing or frame of the electronic device. Typically, no pixels of the display are in the non-display area, thus no image can be displayed by the display 112 in the non-display area. Optionally, a secondary display, not part of the primary display 112, may be disposed under the non-display area. Touch sensors may be disposed in the non-display area, which touch sensors may be extended from the touch sensors in the display area or distinct or separate touch sensors from the touch sensors in the display area. A touch, including a gesture, may be associated with the display area, the non-display area, or both areas. The touch sensors may extend across substantially the entire non-display area or may be disposed in only part of the non-display area.

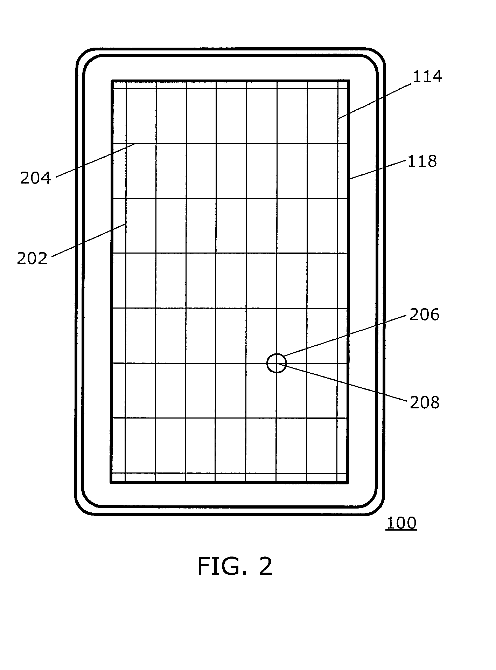

A front view of a portable electronic device 100 is shown in FIG. 2. Two sets of touch sensors 114, also referred to as touch-sensing electrodes, are illustrated in the example of FIG. 2. The touch sensors 114 are shown for the purpose of illustration, but are not visible to the eye when viewing the portable electronic device 100 from the front.

The touch sensors 114 include a set of first electrodes 202 that extend generally vertically in the view illustrated in FIG. 2. The first electrodes 202 may be disposed, for example, on a substrate, on a cover, or on any other suitable layer of the touch-sensitive display 118. The touch sensors 114 also include a set of second electrodes 204 that extend generally horizontally in the view illustrated in FIG. 2. Thus, the first electrodes 202 extend generally perpendicular to the second electrodes 204 and pass over the second electrodes 204 to provide a grid pattern of electrodes. The first electrodes 202 are spaced from the second electrodes 204 by a dielectric material. The first electrodes 202 cross over the second electrodes 204 at nodes of the touch-sensitive display 118. The terms "vertically" and "horizontally" are utilized herein to refer to the orientation of the portable electronic device 100 in the figures and are not otherwise limiting.

The first electrodes 202 and the second electrodes 204 are coupled to the controller 116 and are utilized for touch sensing, for example, mutual capacitive touch sensing and other compatible touch sensing. The controller 116 is configured to drive the first electrodes 202 while sensing changes in signals at the second electrodes 204. Such sensing of changes in signals may be referred to as sensing capacitance. The controller 116 is also configured to drive the second electrodes 204 while sensing changes in signals at the first electrodes 202. Thus, the set of first electrodes 202 and the set of second electrodes 204 may both be utilized as drive electrodes. The set of first electrodes 202 and the set of second electrodes 204 may also be utilized as sense electrodes. The controller may control operation of a switch, multiplexer, or other mechanism, which may be hardware or software, to facilitate changing between driving the first electrodes 202 and driving the second electrodes 204.

Accurate determination of touch location or locations is desirable. In typical touch-sensitive displays, drive electrodes are driven while sensing utilizing sense electrodes. The sense electrodes are not utilized as drive electrodes and the drive electrodes are not utilized as sense electrodes. Such touch-sensitive displays are susceptible to noise. The noise may be common mode noise, for example from a charger when the portable electronic device 100 is coupled to a charger or when the portable electronic device 100 is coupled to a computer. This noise may introduce errors in determining touch position and may result in false touch detection. For example, when a touch occurs near a sense electrode, the touch may be detected and another touch may be incorrectly detected at another location along or near the sense electrode because detected signals may be greater along the sense electrode that is closest to the touch. Thus, when sense electrodes extend horizontally, the determination of the coordinate of the touch location in the horizontal axis may be negatively affected by external. In this example when the sense electrodes extend horizontally, the location of the coordinate in the vertical axis is less influenced by external noise. When the sense electrodes extend vertically, the coordinate of the touch location in the vertical axis is influenced by external noise and may be inaccurate.

Averaging of signal values during touch detection may improve touch detection. Such averaging slows touch detection and further improvements to reduce the affects of noise are desirable. A higher frequency signal may also be utilized to drive the drive electrodes. The frequency is, however, limited by the RC constant of the driving lines, limiting the extent to which the frequency is adjusted.

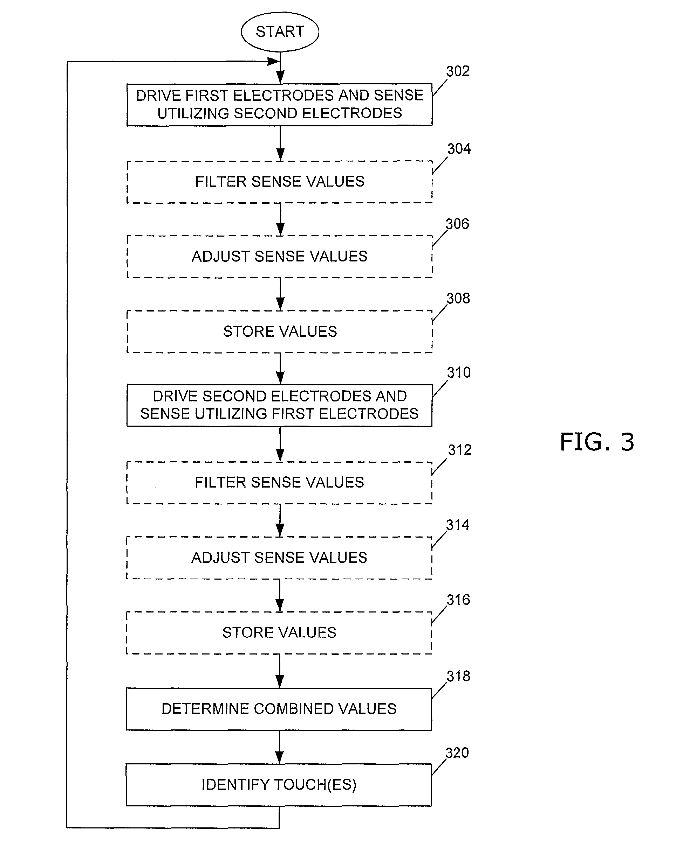

A flowchart illustrating a method of controlling a touch-sensitive display 118 is illustrated in FIG. 3. The method may be carried out by software executed, for example, by the controller 116. Coding of software for carrying out such a method is within the scope of a person of ordinary skill in the art given the present description. The method may contain additional or fewer processes than shown and/or described, and may be performed in a different order. Computer-readable code executable by at least one processor of the portable electronic device to perform the method may be stored in a computer-readable storage medium, device, or apparatus, which may be a tangible or non-transitory computer-readable medium. The method may optionally be implemented in the controller 116.

The first electrodes 202 are driven 302 while sensing utilizing the second electrodes 204. In a frame, one of the first electrodes 202 is driven while sensing utilizing one of the second electrodes 204. The first electrode 202 may be driven with multiple pulses to obtain a measured value. A value of a signal from the one of the second electrodes 204 is stored in association with the node at which the one of the first electrodes 202 that is driven crosses over the one of the second electrodes 204 that is utilized for sensing. Multiple values for a scan line are obtained such that the first electrodes 202 are driven while sensing utilizing of the second electrodes 204 to yield first sense values associated with the nodes of the touch-sensitive display 118.

Optionally, the first sense values may be filtered 304, for example, by low-pass filtering to reduce the contribution of noise to the measured values or by median filtering to remove or reduce spikes in values.

Optionally, an offset may be subtracted from the measured values. The offset is a value measured when no touch is detected on the touch-sensitive display. By subtracting the offset from the measured value when a touch is detected, the noise may be reduced.

Optionally, the first sense values may be adjusted 306 by transforming or setting the measured values to a another set of values, for example, by setting values to a one or a zero depending on the value. The adjusted values may be stored in a matrix in which the numbers are related to measured values. Adjusting such values simplifies mathematical calculations performed utilizing the matrix. The first sense values, which may be measured sense values or may be filtered and/or adjusted sense values, are at least temporarily stored 308 in a first matrix, such that the numbers of the first matrix are associated with nodes of the touch-sensitive display 118.

The second electrodes 204 are driven 310 while sensing utilizing the first electrodes 202. In a frame, one of the second electrodes 204 is driven while sensing utilizing one of the first electrodes 202. The second electrode 204 may be driven with multiple pulses in a frame. A value of a signal from the one of the first electrodes 202 is stored in association with the node at which the one of the first electrodes 202 that is utilized for sensing crosses over the one of the second electrodes 204 that is driven. Multiple values are obtained such that the second electrodes 204 are driven while sensing utilizing the first electrodes 202 to yield second sense values associated with the nodes of the touch-sensitive display 118.

Optionally, the second sense values may be filtered 312, for example, by low-pass filtering to reduce the contribution of noise to the measured values or by median filtering to remove or reduce spikes in values.

Optionally, an offset may be subtracted from the measured second sense values. The offset is a value measured when no touch is detected on the touch-sensitive display. By subtracting the offset from the measured value, the noise may be reduced.

Optionally, the second sense values may be adjusted 314 by transforming or setting the measured values to another set of values that may be a previously determined or identified set of values. For example, the sense values may be adjusted by setting values to one or zero depending on the value such that sensed values less than a threshold value are set to zero and sensed values greater than or equal to the threshold value are set to one. Adjusted values other than ones and zeros may be utilized in addition to or instead of ones and zeros. The adjusted values may be stored in a matrix in which the cells represent measured values. Adjusting such values simplifies mathematical calculations performed utilizing the matrix.

The second sense values, which may be measured sense values or may be filtered and/or adjusted sense values, are at least temporarily stored 316 in a second matrix, such that the numbers of the second matrix are associated with nodes of the touch-sensitive display 118.

The first sense values and the second sense values are utilized in combination to identify a touch on the touch-sensitive display 118. To utilize the first sense values and the second sense values in combination, a scalar array multiplication of the first matrix and the second matrix is performed 318 to yield a resultant matrix. The values in the first matrix are multiplied by values in the second matrix such that a value in the first matrix that is associated with a node of the touch-sensitive display 118 is multiplied by a value in the second matrix that is associated with the same node.

When a touch occurs, the touch on the touch-sensitive display 118 is identified 320 based on the combined values. A touch is identified when a value greater than other values in the matrix by a threshold amount or when a value meets a threshold is present in the resultant matrix. Because the values of the resultant matrix are also associated with nodes at known locations of touch-sensitive display 118, the location of the touch is identified based on which value or values meet a threshold. The threshold may be a predetermined value based on experimentation, calibration, statistical analysis, and/or calculation. For example, touch data is collected via experimentation, historical touch data during operation of the electronic device 100, and/or calibration, e.g., when a user is asked to press on a number of identified locations. From the collected touch data, after the touch data is combined in matrix form as described below, a lowest value for a touch location is identified as well as a highest value for noise at a location where a touch is not identified. The threshold may be a geometric mean or average of the lowest value for a touch location and the highest value for noise at a location where a touch is not identified. High noise values may be obtained, e.g., when the electronic device 100 is being charged. Other methods to obtain a threshold may be utilized.

As a result of scalar multiplying the matrices, signals from a touch may be distinguished from noise caused by, for example, interference with the electrode utilized for sensing. The noise may be common mode noise, for example from a charger when the portable electronic device 100 is coupled to a charger or when the portable electronic device is coupled to a computer. The noise is typically greatest on the sensing electrode that is closest to the touch location and is typically lower on other sensing electrodes. By performing sensing in orthogonal directions and multiplying the result, the effect of noise is reduced, increasing the signal-to-noise ratio. The array scalar multiplication magnifies the differences between values that are greater in magnitude than other values in the matrix because of noise and values that are greater in magnitude than other values in the matrix because a touch is present near the associated node.

Driving and sensing may be sequential such that a single first electrode 202 is driven multiple times while successively sensing with the second electrodes 204, followed by driving the next first electrode 202 multiple times while successively sensing with the second electrodes 204, and so forth. After obtaining sense values associated with the nodes, driving of the second electrodes 204 may begin.

Alternatively, driving and sensing may be in any other suitable order. For example, the controller 116 may drive the first electrodes 202 in an order that is not sequential. The controller 116 may also sense utilizing the second electrodes 204, in an order that is not sequential. The controller 116 may drive the second electrodes 204 in an order that is not sequential and may sense utilizing the first electrodes 202, in an order that is not sequential. The controller 116 may also alternate between driving first electrodes 202 and driving second electrodes 204.

An example of a touch location on the touch-sensitive display 118 is illustrated by the circle 206 in FIG. 2. The node 208 is the closest node to the touch location. One example of a first matrix of measured sense values is in Matrix 1.

**Matrix 1**

| | | | | | | | |
|---|---|---|---|---|---|---|---|
| 2 | 2 | 3 | 4 | 2 | 15 | 4 | 4 |
| 5 | 4 | 4 | 2 | 2 | 40 | 2 | 4 |
| 2 | 5 | 3 | 2 | 3 | 13 | 3 | 3 |
| 5 | 2 | 3 | 4 | 3 | 32 | 3 | 3 |
| 5 | 5 | 4 | 3 | 2 | 13 | 4 | 4 |
| 3 | 4 | 5 | 5 | 4 | 47 | 3 | 4 |
| 5 | 3 | 5 | 3 | 2 | 10 | 2 | 3 |
| 4 | 2 | 5 | 4 | 3 | 30 | 5 | 2 |

The value 47 in Matrix 1 is associated with the node 208 that is closest to the touch. Other values in the same column of the matrix are greater in magnitude than other values in the matrix because of noise. An example of a second matrix of measured sense values is in Matrix 2.

**Matrix 2**

| | | | | | | | |
|---|---|---|---|---|---|---|---|
| 2 | 4 | 2 | 2 | 4 | 3 | 2 | 3 |
| 3 | 2 | 2 | 4 | 5 | 3 | 2 | 3 |
| 4 | 5 | 5 | 5 | 2 | 2 | 4 | 5 |
| 4 | 3 | 2 | 5 | 4 | 5 | 4 | 3 |
| 3 | 5 | 5 | 2 | 3 | 2 | 3 | 4 |
| 34 | 14 | 9 | 26 | 16 | 37 | 27 | 19 |
| 2 | 3 | 4 | 2 | 5 | 4 | 5 | 2 |
| 2 | 4 | 5 | 2 | 3 | 2 | 3 | 4 |

The value 37 in Matrix 2 is associated with the node 208 that is closest to the touch. Other values in the same row of the matrix are greater in magnitude than other values in the matrix because of noise. The resultant matrix from the scalar multiplication of Matrix 1 and Matrix 2 is Matrix 3.

**Matrix 3**

| | | | | | | | |
|---|---|---|---|---|---|---|---|
| 4 | 8 | 6 | 8 | 8 | 45 | 8 | 12 |
| 15 | 8 | 8 | 8 | 10 | 120 | 4 | 12 |
| 8 | 25 | 15 | 10 | 6 | 26 | 12 | 15 |
| 20 | 6 | 6 | 20 | 12 | 160 | 12 | 9 |
| 15 | 25 | 20 | 6 | 6 | 26 | 12 | 16 |
| 102 | 56 | 45 | 130 | 64 | 1739 | 81 | 76 |
| 10 | 9 | 20 | 6 | 10 | 40 | 10 | 6 |
| 8 | 8 | 25 | 8 | 9 | 60 | 15 | 8 |

The value 1739 in Matrix 3 is significantly greater than other values of the resultant matrix and is associated with the node 208 of the touch-sensitive display 118. The touch location is identified as the location on the touch-sensitive display 118 that is associated with the node 208.

By adjusting the values to another set of values, the array multiplication is simplified, simplifying the mathematical operations occurring at the controller 116. Multiplication of the simplified values may reduce processing time at the controller 116.

Optionally, the controller 116 may multiply the sense values of greatest magnitude or the sense values that exceed a threshold and may not multiply other values to reduce the processing time at the controller 116.

Optionally, the controller 116 may drive the first set of electrodes while sensing with the second set of electrodes to detect touches. The controller 116 may switch to driving the second set of electrodes while sensing with the first set of electrodes, for example, when sense values in one column of the first matrix are greater in magnitude than other sense values in the matrix by a threshold amount, which may be a result of noise. Thus, the controller 116 may determine when to drive the second set of electrodes based on the sense values from driving the first set of electrodes. This determination may reduce the measurement time.

Utilizing the combined results of driving a first set of electrodes while sensing with a second set electrodes and driving the second set of electrodes while sensing with the first set of electrodes, touches may be detected, and the likelihood the of falsely detecting a touch is reduced.

The present disclosure may be embodied in other specific forms without departing from its spirit or essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. A method comprising:
driving a first set of electrodes while sensing utilizing a second set of electrodes yielding first sense values;
driving the second set of electrodes while sensing utilizing the first set of electrodes yielding second sense values;
determining combined values based on the first sense values and the second sense values;
identifying a touch location based on the combined values.

2. The method according to claim 1, wherein the determining comprises filtering the first sense values and the second sense values to remove noise.

3. The method according to claim 1, wherein determining comprises low-pass filtering or median filtering.

4. The method according to claim 1, wherein the first sense values and the second sense values are capacitance values.

5. The method according to claim 1, wherein the determining comprises array multiplication of the first sense values by the second sense values.

6. The method according to claim 1, wherein the determining comprises setting, in sensed values less than a threshold value, to zero and array multiplying the first sense values by the second sense values.

7. The method according to claim 1, wherein the determining comprises setting, in at least one of the first and second matrix, sensed values greater than a threshold value to a second value and array multiplying the first sense values by the second sense values.

8. The method according to claim 7, wherein the other value is one.

9. The method according to claim 1, wherein determining comprises multiplying the first sense values that meet a threshold by second sense values.

10. The method according to claim 1, wherein the determining comprises adjusting the first scanned values and the second scanned values by subtracting an offset.

11. The method according to claim 10, wherein the offset comprises a value measured when no touch is detected on the touch-sensitive display.

12. A computer-readable storage device having computer-readable code executable by at least one processor of an electronic device to perform the method of claim 1.

13. An electronic device comprising:
a touch-sensitive display comprising touch sensors;
a processor coupled to the touch-sensitive display and configured to:
drive a first set of electrodes while sensing with a second set of electrodes yielding first sense values;
drive the second set of electrodes while sensing with the first set of electrodes yielding second sense values;
determine combined values based on the first sense values and the second sense values;
identify a touch location based on the combined values.

14. The electronic device according to claim 13, wherein the processor is further configured to filter the first sense values and the second sense values to remove noise components.

15. The electronic device according to claim 13, wherein the processor is configured to array multiply the first sense values in a first matrix by the second sense values in a second matrix.
